# EUROPÄISCHE PATENTSCHRIFT

(11) **EP 2 226 231 B1**
(45) Veröffentlichungstag und Bekanntmachung des Hinweises auf die Patenterteilung: **01.10.2014**
(21) Anmeldenummer: 09003231.9
(22) Anmeldetag: 05.03.2009
(51) Int. Cl.: B61D 17/22, B60D 5/00

(54) **Vorrichtung zur seitlichen Abdeckung des Abstandes zwischen zwei miteinander gekuppelten Fahrzeugen, insbesondere Schienenfahrzeugen**
Device for side covering of the space between two vehicles coupled to each other, in particular rail vehicles
Dispositif de recouvrement latéral de l'intervalle entre deux véhicules couplés ensemble, notamment des véhicules sur rail

(43) Veröffentlichungstag der Anmeldung: 08.09.2010
(73) Patentinhaber: Hübner GmbH & Co. KG, 34123 Kassel (DE)
(72) Erfinder: Goebels, Andre, 34134 Kassel (DE)
(74) Vertreter: Walther, Walther & Hinz GbR

(56) Entgegenhaltungen:
- EP-A1- 1 810 852
- DE-A1- 4 412 888
- DE-C- 595 382
- DE-C1- 19 621 913
- FR-A1- 2 613 306

## Beschreibung

Die Erfindung betrifft eine Vorrichtung zur seitlichen Abdeckung des Abstandes zwischen zwei miteinander gekuppelten Fahrzeugen ohne einen Übergang zwischen den Fahrzeugen, insbesondere Schienenfahrzeugen.

Üblicherweise sind bei gelenkig miteinander verbundenen Fahrzeugen die einzelnen Fahrzeuge durch einen Übergang mit einem Balg miteinander verbunden.

Die DE 196 21 913 C1 zeigt in diesem Zusammenhang einen Falten- oder Wellenbalg als Teil eines Übergangs zwischen zwei Fahrzeugteilen, wobei der Balg einen Mittelrahmen aufweist. Der Mittelrahmen weist Führungen für Versorgungsleitungen auf, die zwischen den beiden Fahrzeugteilen verlaufen.

Aus der FR 2 613 306 A1 ist eine im Querschnitt rechteckige, umlaufende Übergangseinrichtung zwischen zwei Fahrzeugteilen bekannt, wobei die Übergangseinrichtung zwei Rahmen umfasst, wobei jeder Rahmen mit seiner einen Seite durch ein Balgelement mit der Stirnseite des Fahrzeugteils verbunden ist, und auf seiner anderen Seite einen Gummiwulst aufweist, der an dem Gummiwulst des benachbarten Rahmens anliegt.

Die EP 1 810 852 A1 zeigt einen Balg zwischen zwei gelenkig miteinander verbundenen Fahrzeugen, wobei der Balg einen herausnehmbaren Balgboden aufweist.

Die DE 595 382 C zeigt ebenfalls einen Faltenbalg zwischen zwei Fahrzeugen.

Insbesondere bei Schienenfahrzeugen gibt es aber auch Fahrzeuge, die zwar miteinander gekuppelt sind, die aber über keinen Übergang zwischen den miteinander gekuppelten Fahrzeugen verfügen. Ein solcher Übergang besteht üblicherweise aus einer Übergangsbrücke, die sich über der Fahrzeugkupplung befindet, sowie einen die Übergangsbrücke überspannenden Falten- oder Wellenbalg. Zwischen solchen nur miteinander gekuppelten Fahrzeugen besteht demzufolge ein Abstand, der rein theoretisch den Durchtritt ermöglicht. Es hat sich herausgestellt, dass insbesondere Personen mit starken Sehfehlern eine solche Öffnung in der Verbindung zwischen zwei Fahrzeugen als geöffnete Tür ansehen, und insofern in den Abstand eintreten. Hierbei ist es bereits häufiger zu Verletzungen gekommen, weshalb man bemüht ist, hier Abhilfe zu schaffen.

Erfindungsgemäß wird durch die Merkmale des Anspruchs 1 nur Abhilfe geschaffen. Im Einzelnen wird vorgeschlagen, den Abstand zwischen zwei miteinander gekuppelten Schienenfahrzeugen ohne einen Übergang zwischen den Fahrzeugen, durch zwei parallel zueinander verlaufende, zumindest in Fahrzeuglängsrichtung sich verformbare Seitenwände abzudecken, wobei die Seitenwände im oberen und unteren Bereich durch Streben miteinander in Verbindung stehen, wobei die Streben in Längsrichtung des Fahrzeugs durch mindestens einen ziehharmonikaartig ausgebildeten Stoffstreifen miteinander relativ zueinander verschieblich verbunden sind. Durch die Anordnung derartiger Seitenwände zwischen miteinander gekuppelten Fahrzeugen wird somit der Eintritt verhindert. Theoretisch wäre denkbar, die Seitenwände jeweils gesondert für sich an den Stirnseiten zweier benachbarter Wagenkästen von Fahrzeugen zu befestigen. Es hat sich allerdings herausgestellt, dass die Seitenwände aufgrund ihrer geringen Eigenstabilität zum einen durchhängen und zum anderen bei Verformung seitlich ausbrechen. Insofern sind die Seitenwände durch Streben miteinander verbunden, wobei die Streben selbst in Längsrichtung des Fahrzeugs ebenfalls relativ zueinander verschieblich miteinander verbunden sind. Hierdurch wird insbesondere die ziehharmonikaartige Bewegung der Streben zueinander, so wie sie auftritt, wenn ein solches Fahrzeug beispielsweise durch eine Kurve fährt, derart gesteuert, dass sich die einzelnen Streben in Richtung quer zur Fahrzeuglängsachse nicht unkontrolliert verschieben, sondern - wie bereits ausgeführt - durch die Verbindung miteinander während der Bewegung in gewissem Umfang zwangsgeführt sind.

Bereits an anderer Stelle ist erläutert worden, dass die Streben in Längsrichtung des Fahrzeugs miteinander relativ zueinander verschieblich verbunden sind. In diesem Zusammenhang ist ein in seiner Länge veränderbares Verbindungsmittel in Form eines ziehharmonikaartig ausgebildeten Stoffstreifens vorgesehen, wobei dieser ziehharmonikaartig ausgebildete Stoffstreifen als Stück eines Falten- oder Wellenbalges ausgebildet sein kann. Hierdurch ist, insbesondere dann, wenn die Verbindung zu beiden Seiten der Mittellängsachse durch einen solchen Stoffstreifen erfolgt, eine Zwangsführung der Streben bei Verformung der Seitenwände gewährleistet.

Vorteilhafte Merkmale und Weiterbildungen der Erfindung sind in den Unteransprüchen beschrieben.

Vorteilhaft ist vorgesehen, dass die Seitenwand als balgartige Seitenwand, insbesondere als faltenbalgartige Seitenwand ausgebildet ist. Durch die Verwendung einer balgartigen Seitenwand, insbesondere einer faltenbalgartigen Seitenwand, ist das ziehharmonikaförmige Muster beim Zusammenfalten der Seitenwand vorgegeben, wenn ein solches Fahrzeug z. B. eine Kurve durchfährt.

Des Weiteren ist vorgesehen, dass die balgartige Seitenwand im Einbauzustand in vertikaler Richtung verlaufende Rahmenleisten aufweist, wobei die Rahmenleisten der einen Seitenwand mit den Rahmenleisten der anderen gegenüberliegenden Seitenwand durch die bereits erwähnten Streben miteinander verbunden sind.

Anhand der Zeichnungen wird die Erfindung nachstehend beispielhaft näher erläutert.
- Fig. 1: zeigt die schematische Darstellung zweier miteinander gekuppelter Fahrzeugteile, die eine erfindungsgemäße Seitenwand zu jeder Seite des Fahrzeugs aufweisen;
- Fig. 2: zeigt einen Schnitt gemäß der Linie III/III aus Fig. 1, wobei die Seitenwand weggelassen wurde;
- Fig. 2a: zeigt die Einzelheit X aus Fig. 2 in einer Schnittdarstellung;
- Fig. 3: zeigt einen Schnitt gemäß der Linie II/II aus Fig; 1
- Fig. 4: zeigt die Einzelheit Y in einer Seitenansicht.

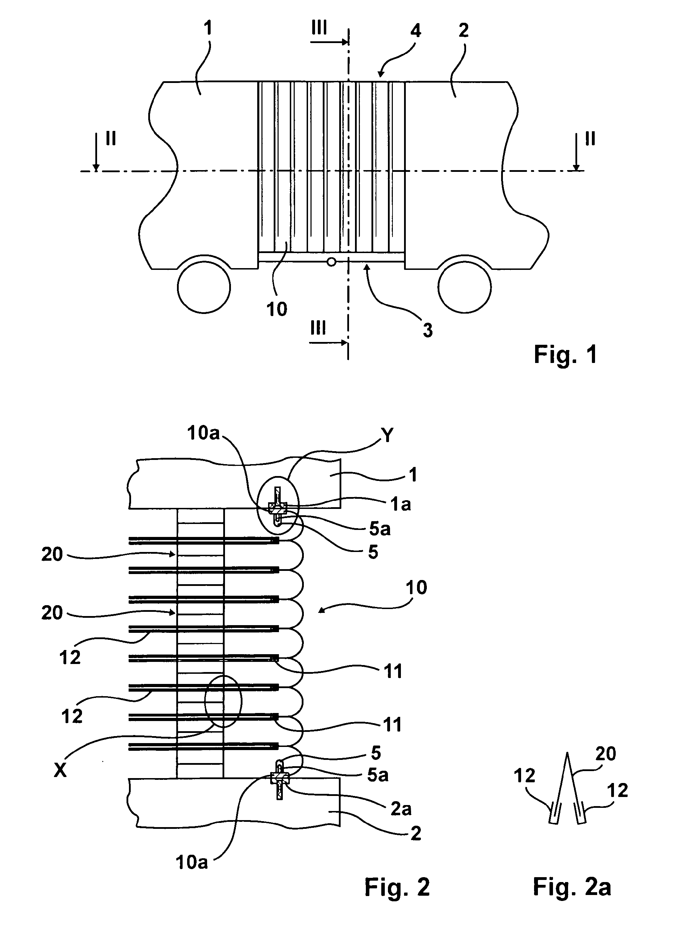

Gemäß Fig. 1 sind zwei Fahrzeugteile 1 und 2 vorgesehen, die durch eine Gelenkkupplung 3, die lediglich schematisch dargestellt ist, verbunden sind. Zwischen den Fahrzeugen besteht ein Abstand 4, der durch zwei parallel verlaufende Seitenwände 10 abgespannt ist.

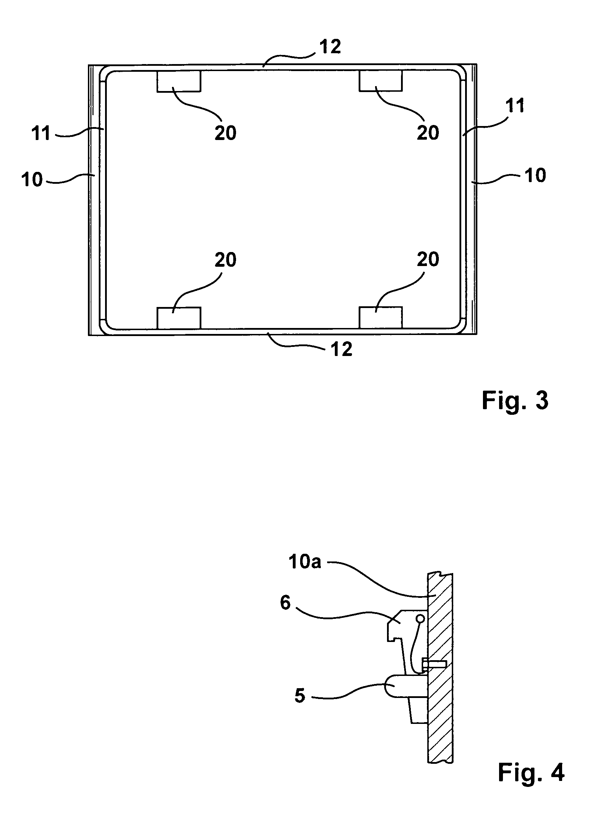

Die Ausbildung der Seitenwände 10 ist Gegenstand der Fig. 2 und 3. Bei der Darstellung gemäß Fig. 2 besteht die insgesamt mit 10 bezeichnete Seitenwand aus einzelnen Wellen oder Falten. Die einzelnen Wellen oder Falten sind durch eine Rahmenschiene 11 innenseitig gefasst, wobei im oberen und unteren Bereich der Rahmenschienen parallel zur anderen Seitenwand verlaufende Streben 12 vorgesehen sind. Die Streben 12 sind an den Rahmenschienen 11 befestigt. Der Verlauf der Streben 12 und deren Anordnung an den Rahmenschienen 11 der Balgseitenwand 10 ergibt sich schematisch aus Fig. 3.

Wesentlich ist darüber hinaus die Verbindung der einzelnen Streben 12 durch einen Balgstreifen 20, wobei der Balgstreifen 20 die einzelnen Streben 12 ziehharmonikaartig nach Art eines Faltenbalges verbindet (Fig. 2a). Zwei solcher Balgstreifen 20 befinden sich sowohl im Dachbereich angeordneten Querstreben 12 als auch bei den der im Bodenbereich angeordneten Querstreben 12, und zwar jeweils in etwa parallel zur im Bereich der Seitenwände. Die Verbindung der beiden Seitenwände 10 durch die Streben in Verbindung mit dem Balgstreifen 20 bewirkt, dass die Seitenwände 10 in ihrer Bewegung während des Stauchens und Dehnens geführt sind, so dass die Seitenwände nicht seitlich ausbrechen können bzw. auch das Zusammenschieben bei Durchfahren einer Kurve definiert erfolgt.

Aus Fig. 4 ergibt sich die Befestigung der Seitenwand an den Wagenkästen der Fahrzeuge 1 und 2. Hierzu ist eine Leiste 1a, 2a vorgesehen, wobei die Leiste 1a, 2a an der Stirnseite des Wagenkastens 1, 2 angeschraubt ist. Die Leiste weist darüber hinaus mehrere übereinander angeordnete Stehbolzen 5 auf, die jeweils einen Schlitz 5a besitzen, durch den ein Keil 6 geschoben wird. Durch diesen Keil 6 wird die am Ende der Seitenwand angeordnete Balgleiste 10a, die eine entsprechende Öffnung für den Stehbolzen aufweist, schlussendlich an den jeweiligen Wagenkasten 1, 2 fixiert.

## Patentansprüche

1. Vorrichtung zur seitlichen Abdeckung des Abstandes (4) zwischen zwei miteinander gekuppelten Fahrzeugen ohne einen Übergang zwischen den Fahrzeugen, insbesondere Schienenfahrzeugen (1, 2), wobei die Vorrichtung ausschließlich zwei parallel zueinander verlaufende, zumindest in Fahrtlängsrichtung sich verformende Seitenwände (10) aufweist, wobei die Seitenwände (10) im oberen und unteren Bereich durch Streben (12) miteinander in Verbindung stehen, wobei die Streben (12) in Längsrichtung des Fahrzeugs durch mindestens einen ziehharmonikaartig ausgebildeten Stoffstreifen relativ zueinander verschieblich verbunden sind.

2. Vorrichtung nach Anspruch 1,
**dadurch gekennzeichnet,**
**dass** die Seitenwand (10) als balgartige Seitenwand, insbesondere als faltenbalgartige Seitenwand, ausgebildet ist.

3. Vorrichtung nach einem der voranstehenden Ansprüche,
**dadurch gekennzeichnet,**
**dass** die balgartige Seitenwand (10) im Einbauzustand in vertikaler Richtung verlaufende Rahmenleisten (11) aufweist.

4. Vorrichtung nach Anspruch 3,
**dadurch gekennzeichnet,**
**dass** Rahmenleisten (11) der einen Seitenwand (10) mit den Rahmenleisten (11) der gegenüberliegenden Seitenwand (10) durch Streben (12) verbunden sind.

## Claims

1. A device for laterally covering the gap (4) between two vehicles coupled to each other without a gangway between the vehicles, more specifically rail vehicles (1, 2), wherein the device has solely two lateral walls (10) running parallel to each other, which are deformable at least in the longitudinal direction of travel, wherein the lateral walls (10) are connected to each other by way of rods (12) in the top and bottom area, wherein the rods (12) are connected so as to be displaceable relative to each other in the longitudinal direction of the vehicle by means of at least one fabric strip designed in the manner of a concertina.

2. The device according to claim 1,
**characterized in that**
the lateral wall (10) is designed as a bellows-type lateral wall, more specifically as a folding bellows-type lateral wall.

3. The device according to one of the afore-mentioned claims,
**characterized in that**
in the mounted state, the bellows-type lateral wall (10) has frame bars (11) running in the vertical direction.

4. The device according to claim 3,
**characterized in that**
frame bars (11) of the one lateral wall (10) are connected with the frame bars (11) of the opposite lateral wall (10) by way of rods (12).

## Revendications

1. Dispositif pour la couverture latérale de l'espace (4) entre deux véhicules couplés entre eux sans passage entre les véhicules, en particulier des véhicules sur rails (1, 2), dans lequel le dispositif comporte exclusivement deux parois latérales déformables (10), parallèles entre elles, au moins dans la direction longitudinale de circulation, dans lequel les parois latérales (10) sont reliées entre elles dans la zone inférieure et la zone supérieure par des entretoises (12), dans lequel les entretoises (12) sont reliées de manière à pouvoir coulisser relativement entre elles, au moins dans la direction longitudinale du véhicule, par au moins une bande de tissu ayant une forme d'accordéon.

2. Dispositif selon la revendication 1,
**caractérisé en ce que,**
la paroi latérale (10) est configurée comme une paroi en soufflet, en particulier en forme de soufflet à plis.

3. Dispositif selon l'une des revendications précédentes,
**caractérisé en ce que,**
la paroi latérale en forme de soufflet (10) comporte dans son état monté, des listes de cadre (11) qui s'étendent verticalement.

4. Dispositif selon la revendication 3,
**caractérisé en ce que**,
les listes de cadre (11) de l'une des parois latérales (10) sont liées aux listes de cadre (11) de la paroi latérale disposée en regard au moyen des entretoises (12).
